# EUROPEAN PATENT SPECIFICATION

(11) **EP 2 493 218 B1**
(45) Date of publication and mention of the grant of the patent: **04.04.2018**
(21) Application number: 09846073.6
(22) Date of filing: 23.12.2009
(51) Int. Cl.: H04W 4/12, H04L 12/58

(54) **METHOD AND DEVICE FOR TRACING MULTIMEDIA MESSAGE**
VERFAHREN UND VORRICHTUNG ZUR NACHVERFOLGUNG VON MULTIMEDIA-NACHRICHTEN
PROCEDE ET DISPOSITIF POUR LE SUIVI DE MESSAGE MULTIMEDIA

(30) Priority: 21.10.2009 CN 200910236433
(43) Date of publication of application: 29.08.2012
(73) Proprietor: ZTE Corporation, Shenzhen, Guangdong 518057 (CN)
(72) Inventor: ZHOU, Shijun, Guangdong 518057 (CN)
(74) Representative: Quinterno, Giuseppe
(86) International application number: PCT/CN2009/075874
(87) International publication number: WO 2010/145159

(56) References cited:
- CN-A- 1 889 536
- CN-A- 101 102 535
- CN-A- 101 227 657
- CN-A- 101 227 657
- CN-A- 101 304 554
- CN-A- 101 304 554
- US-A1- 2009 077 182
- US-A1- 2009 187 631

## Description

### Field of the Invention

The present invention relates to the field of mobile communications, and in particular to an apparatus and a method for tracing multimedia message content.

### Background of the Invention

A Multimedia Messaging Service, MMS, is a messaging service capable of transmitting multimedia content between mobile phones and between a mobile phone and other applications such as an Email server etc. The MMS is divided according to an operator to which a user belongs and an area in which a user is located. The MMS is provided to the user by an MMS Centre, MMSC, to which the user belongs.

A Service Provider, SP, is a direct provider of mobile Internet application services and is responsible for developing and providing services applicable to mobile phone users according to the requirements of the users. The SP, as a service provider possessing telecommunication access resources, is provided with a telecommunication operator access channel to provide services for the users.

A Multimedia Messaging Service Gateway, MMSG, located between the MMSC and the SP, is configured to forward all messages interacted between the MMSC and the SP, thus improving the message delivery performance of the SP and reducing the technical barriers for the SP. MM7 interfaces are applied between the MMSG and the SP, and between the MMSG and the MMSC.

With further development of the MMS, in order to increase the multimedia messaging traffic of the existing network and encourage users to send multimedia messages, it is required to make some marks in the content of a multimedia message and trace the forwarding times of this multimedia message according to the marks, so as to promote the development of the MMS traffic through some ranking lists and preferential charging policies while avoiding changes to the service system of the SP.

CN 101 304 554 A discloses a method for tracing a multimedia message, comprising carrying, when a Service Provider delivers a seed multimedia message, a trace mark in a message; a Multimedia Messaging Service Gateway, MMSG, distinguishing the seed multimedia message according to the trace mark and initiating a registration procedure of the seed multimedia message to a Multimedia Messaging Trace Centre, MMTC; a Multimedia Message Service Centre, MMSC, recording, during a forwarding procedure of the seed multimedia message, a trace log file; and the MMTC performing statistic operation to obtain forwarding times of the seed multimedia message according to registration information of the seed multimedia message of the content of the trace log recorded by the MMSC.

CN 101 227 657 discloses a similar method.

However, the above mentioned problem still remains unsolved.

### Summary of the Invention

In view of the above, the present invention mainly provides the method for tracing a multimedia message having the main features defined in annexed claim 1.

Preferably, the step of carrying the trace mark in the message when the SP delivers the seed multimedia message comprises: content of the seed multimedia message in the message is delivered in a form of Smile, and the trace mark is added into a source (SRC) field corresponding to the content of the seed multimedia message.

The registration procedure of the seed multimedia message comprises:
the MMSG sending a registration request message to the MMTC, wherein the registration request message carries related information of the seed multimedia message;
the MMTC judging whether the seed multimedia message has registered according to the registration request message;
if the seed multimedia message has not registered, then generating a new identifier of the seed multimedia message, storing the identifier of the seed multimedia message and the related information of the seed multimedia message in a database, and returning the generated new identifier of the seed multimedia message to the MMSG;
if the seed multimedia message has registered, then returning the identifier of the registered seed multimedia message to the MMSG; and
if the registration of the seed multimedia message fails, then returning a failure response to the MMSG.

The related information of the seed multimedia message at least comprises a check code of content of the seed multimedia message, a size of the registration request message and a Service Provider Identifier (SPID) to which the seed multimedia message belongs; the step of judging whether the seed multimedia message has registered comprises: judging whether there exists a record which is consistent with the check code of the content of the seed multimedia message and the size of the registration request message in the database; if there is no such record, then the seed multimedia message has not registered; if there is such a record and the SPID to which the seed multimedia message belongs is the same, then the seed multimedia message has registered, otherwise, the registration of the seed multimedia message fails.

Preferably, the MMTC periodically scans the trace log file transmitted from the MMSC, wherein the trace log file comprises an identifier of the seed multimedia message generated during the registration of the seed multimedia message; the registration information of the seed multimedia message at least comprises an identifier of the seed multimedia message and an SPID to which the seed multimedia message belongs; the MMTC performs statistic processing for the trace log file to generate report statistic information.

The present invention also proposes an apparatus for tracing a multimedia message, having the main features defined in annexed claim 4.

In such an apparatus the registration module comprises:
a registration checkout module, configured to perform registration checkout of the seed multimedia message, compare related information of the seed multimedia message in the registration request message of the seed multimedia message with corresponding information of all registered seed multimedia messages stored in the database, judge whether the seed multimedia message has registered, and invoke a corresponding registration sub-module according to a comparison result;
a first registration sub-module, configured to generate a new identifier of the seed multimedia message in a condition that the seed multimedia message has not registered, store the identifier and related information of the seed multimedia message in the database, and return the generated new identifier of the seed multimedia message to the MMSG;
a second registration sub-module, configured to acquire, in a condition that the seed multimedia message has registered, the identifier of the registered seed multimedia message from the database module, and return the identifier of the registered seed multimedia message to the MMSG; and
a third registration sub-module, configured to return a registration failure response to the MMSG in a condition that the registration fails.

The related information of the seed multimedia message at least comprises a check code of content of the seed multimedia message, a size of the registration request message and a Service Provider Identifier (SPID) to which the seed multimedia message belongs; the registration checkout module first judges whether there exists a record which is consistent with the check code of the content of the seed multimedia message and the size of the registration request message in the database, invokes the first registration sub-module to perform processing if there is no such record, invokes the second registration sub-module to perform processing if there is such a record and the SPID to which the seed multimedia message belongs is the same, and invokes the third registration sub-module to perform processing if there is such a record but the SPID to which the seed multimedia message belongs is different.

Preferably, the apparatus further comprises:
a seed multimedia message content display module, configured to display content of the seed multimedia message to a user, and provide report data, which are generated by querying the report module, for an operator.

In accordance with the method and the apparatus for tracing a multimedia message provided by the present invention, a mark can be conveniently carried when the SP delivers a multimedia message, then the MMSG performs registration, and the MMSC records a trace log when forwarding the multimedia message, thus the forwarding times of the multimedia message are recorded very accurately and efficiently to rank the multimedia message and provide certain incentives to those SPs on the top of the traffic list, thus promoting the development of the MMS.

### Brief Description of the Drawings

Fig. 1 is a flowchart of a method for realizing registration of a seed multimedia message in accordance with an embodiment of the present invention;
Fig. 2 is a structural schematic diagram of an apparatus for tracing a multimedia message in accordance with an embodiment of the present invention;
Fig. 3 is a flowchart of packaging and delivering a seed multimedia message in accordance with an embodiment of the present invention; and
Fig. 4 is a flowchart of forwarding a seed multimedia message in accordance with an embodiment of the present invention.

### Detailed Description of the Embodiments

In order to make the objective, the technical solution and the advantages of the present invention more clear, the present invention is described below in details with reference to the embodiments and the accompanying drawings.

In the embodiments of the present invention, a Multimedia Messaging Trace Centre (MMTC) is added to an existing multimedia messaging system. The MMTC can intercommunicate with all MMSGs, and establish connections, which are used for the registration of a seed multimedia message, with all MMSGs. Also, the MMTC provides FTP services and interfaces for all MMSCs and is configured to transmit a trace log file of the MMSC.

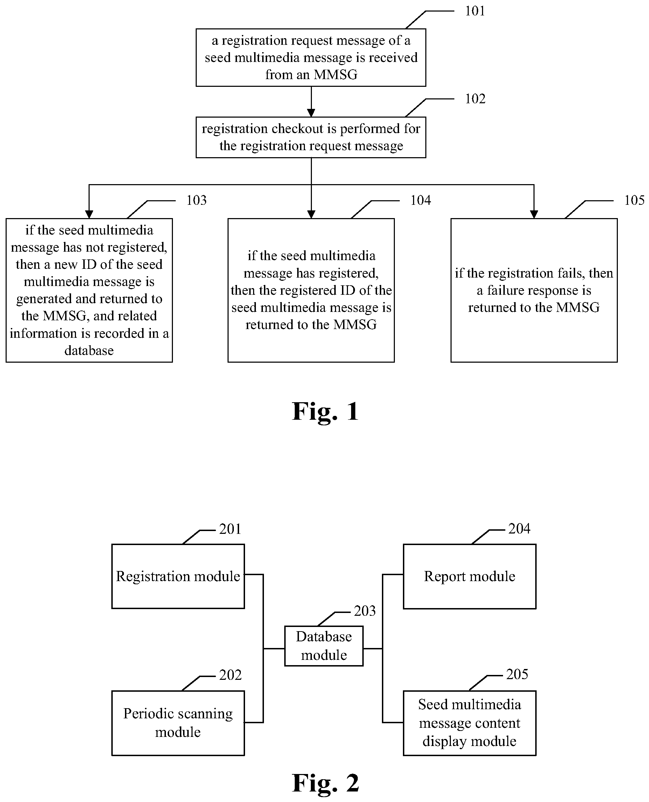

Fig. 1 shows a flowchart illustrating a method for realizing registration of a seed multimedia message in accordance with an embodiment of the present invention. The seed multimedia message in the embodiments of the present invention is the multimedia message which the SP desires to trace for statistic operation. The MMTC receives registration information of the seed multimedia message sent by the MMSG, wherein the registration information comprises a CRC check code of content of the multimedia message, a Service Provided Identifier (SPID) and the size of the registration request message etc. If the registration succeeds, a new identifier of the seed multimedia message is generated and returned to the MMSG by the MMTC. The statistic of the service is performed according to the ID of the seed multimedia message during subsequent forwarding of the message. The specific registration steps of the seed multimedia message are as follows.

Step 101: the MMTC receives a registration request message from the MMSG, wherein the message which can be coded in the form of a hypertext transfer protocol (HTTP), comprises a CRC check code of the content of the multimedia message, an SPID and the size of the registration message etc.

Step 102: the MMTC performs registration checkout according to the received registration request message of the seed multimedia message, and performs the corresponding processing according to the checkout result.

In a preferable embodiment of the present invention, the method for performing the registration checkout comprises: the information (the CRC check code of the content of the seed multimedia message, the size of the registration message and the SPID) in the registration request message of the seed multimedia message is compared with the information in the registration message of the existing seed multimedia messages stored in a database, and corresponding processing is performed according to the comparison result.

Step 103: if the information in the registration request message of the seed multimedia message, which is the same as the CRC check code of the content of the seed multimedia message and the size of the registration message in the above registration request message, is not found in the database, the multimedia message corresponding to the registration request is regarded as a new seed, a new ID of the seed multimedia message is generated and fed back to the MMSG, and then the information in the registration request message of the seed multimedia message is recorded in the database.

Step 104: if the information in the registration request message of the seed multimedia message, which is the same as the CRC check code of the content of the seed multimedia message and the size of the registration message in the above registration request message, is found in the database and the SPID is the same, it is considered that the seed multimedia message has registered, and the original registered ID of the seed multimedia message is returned to the MMSG which delivers the message according to the delivery process of common messages.

Step 105: if the information in the registration request message of the seed multimedia message, which is the same as the CRC check code of the content of the seed multimedia message and the size of the registration message in the above registration request message, is found in the database but the SPID is the different, it is considered that the registration of the seed multimedia message fails, the registration request from the SP corresponding to the SPID cannot be accepted, and a failure response is returned to the MMSG which delivers the message according to the delivery process of common messages.

Fig. 2 is a structural diagram illustrating an apparatus for tracing a multimedia message in accordance with an embodiment of the present invention. The apparatus comprises: a registration module, a periodic scanning module, a database module, a report module and a seed multimedia message content display module.

The registration module 201 is configured to receive a registration request message of a seed multimedia message from an MMSG, perform registration checkout of the seed multimedia message, wherein the registration request message of the seed multimedia message comprises a CRC check code of the content of the seed multimedia message, the size of the registration message, and an SPID etc.

The registration module comprises:
a registration checkout module, configured to compare the information (the CRC check code of the content of the seed multimedia message, the size of the registration message and the SPID) in the registration request message of the seed multimedia message with the information in the registration request messages of existing seed multimedia messages in the database, and invoke the corresponding registration sub-module according to the comparison result;
a first registration sub-module, configured to, if the registration information of the existing seed multimedia messages in the database does not have the same record as the CRC check code of the content of the seed multimedia message and the size of the registration message, then regard the seed multimedia message as a new seed, generate a new ID of the seed multimedia message directly and feed back the new ID of the seed multimedia message to the MMSG;
a second registration sub-module, configured to, if the registration information of the existing seed multimedia messages in the database has the same record as the CRC check code of the content of the seed multimedia message and the size of the registration message, and the SPID is the same, consider that the seed multimedia message has registered and return the ID of the seed multimedia message in the database to the MMSG; and
a third registration sub-module, configured to, if the registration information of the existing seed multimedia messages in the database has the same record as the CRC check code of the content of the seed multimedia message and the size of the registration message, but the SPID is not the same, return a registration failure response to the MMSG.

The periodic scanning module 202 is configured to periodically check a directory which is used for storing trace log files transmitted from the MMSC by using a File Transfer Protocol (FTP), if there is a trace log file, store the content of the trace log file to the database in time, and delete the processed trace log file. The periodic scanning module 202 is further configured to receive and store the seed multimedia message content file transmitted by the MMSC by using the FTP. The trace log file comprises an ID of the seed multimedia message generated during the registration procedure, and an SPID to which the seed multimedia message belongs etc.

The database module 203 is configured to store the registration information of all seed multimedia messages which have registered successfully and store the content of the trace log files transmitted by the MMSC. The registration information of the seed multimedia message at least comprises: a name of the seed multimedia message, an ID of the seed multimedia message, a CRC check code of the content of the seed multimedia message, and the SPID to which the seed multimedia message belongs etc. This information is applied for report display. The information also needs to be correlated during query of the content of the seed multimedia message. Meanwhile, the content of the trace log file transmitted by the MMSC is also recorded for report display and statistic processing of the ranking data.

The report module 204 is configured to generate the statistical ranking of related seed multimedia message according to the registration information of the seed multimedia message and the content of the trace log file stored in the database. The statistical ranking of related seed multimedia message comprises the statistical ranking of the forwarding times of the content of a certain seed multimedia message and the ranking of the forwarding times of all seed multimedia messages provided by a certain SP etc.

The seed multimedia message content display module 205 is configured to display the content of the seed multimedia message for a user by means of WEB etc., provide report data generated by querying the report module for the operator, and monitor the attention paid to the seed multimedia message.

In virtue of the apparatus for tracing a multimedia message in accordance with this embodiment, a separate interface for registering a seed multimedia message is unnecessary to be provided for the SP. The registration procedure can be directly completed during the multimedia message delivery process of the SP. Therefore, it is not required to modify the interface of the SP, it is only required to add a Smile field to the delivered multimedia message by the SP to describe the message and identify that the message is a seed multimedia message registration message. In addition, the embodiment of the present invention provides an interface for the operator to rank the forwarding times of the seed multimedia message so that the operator can provide some incentives to those SPs on the top of the list.

The implementation of the present invention involves a service processing procedure of packaging and delivering a seed multimedia message and a service processing procedure of forwarding a seed multimedia message. These two service processing procedures are respectively described as follows in details.

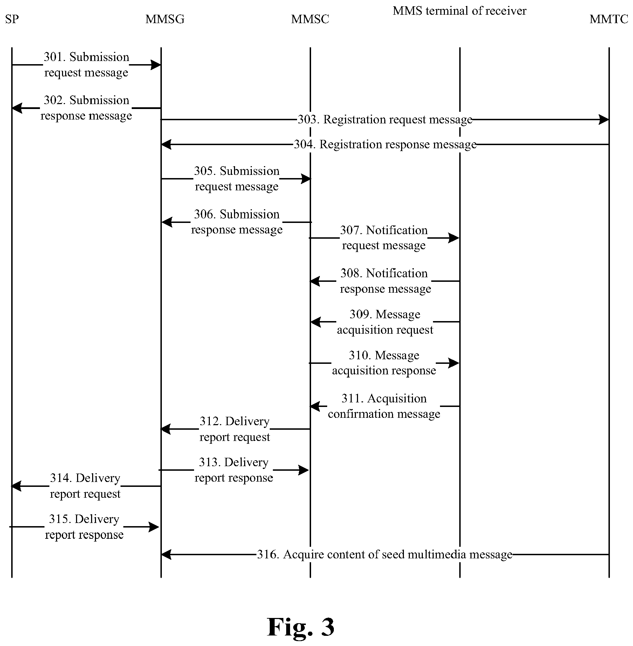

Fig. 3 is a flowchart of the service processing procedure of packaging and delivering a seed multimedia message, and the flow comprises steps as follows.

Step 301-302: an SP sends a submission request message to an MMSG according to a regular messaging process of multimedia message delivery; and the MMSG sends a submission response message to the SP.

If the SP designates that the content of a certain multimedia message needs to be taken as a seed multimedia message, the content needs to be delivered in a form of Smile when the SP delivers the submission request message, in addition, a trace mark which can be user-defined should be added to the source (SRC) field corresponding to the content of the seed multimedia message. In this embodiment, "-" is applied as the trace mark, i.e. a character "-" is added in front of the content of the SRC field which is configured to store the name and path information of the multimedia message file.

Step 303-304: the MMSG checks the SRC value in the content of the submission request message (MM7_submit.REQ) sent by the SP. If the trace mark (character string started with "-") is included, a CRC check code of the content of the multimedia message is calculated first, and then a registration request message is sent to an MMTC, wherein the registration request message comprises information such as a CRC check code of the content of the multimedia message, a file name, a file size, a number of the transmitter, a number of the receiver, and an SPID to which the multimedia message belongs etc. The MMTC checks the information, judges whether the multimedia message is a new seed multimedia message, if it is a new seed multimedia message, a new ID of the seed multimedia message is assigned, and the assigned new ID of the seed multimedia message is carried in the registration response message to the MMSG; if it is not a new seed multimedia message, the registration fails, the MMSG removes the trace mark first, and then delivers the multimedia message as a common message.

The method for the MMTC to judge whether the multimedia message is a new seed multimedia message in the above step comprises steps as follows.

The MMTC, after receiving the registration request message, compares the CRC check code of the content of the seed multimedia message and the size of the registration request message of the seed multimedia message with the locally stored corresponding information of the seed multimedia messages which have registered successfully and performs the following processing according to the comparison result:
(1) if the comparison result is that they are different, the MMTC assigns a new ID of the seed multimedia message, returns the new ID of the seed multimedia message to the MMSG, and records the SPID to which the seed multimedia message belongs at the same time;
(2) if the comparison result is that they are the same, and the SPID to which the multimedia message belongs is the same, the registered identifier of the seed multimedia message is searched in the local database and returned to the MMSG;
(3) if the comparison result is that they are the same, but the SPID to which the multimedia message belongs is different, then the registration fails.

Step 305-306: the MMSG makes judgment according to the response message of the MMTC: if the current multimedia message is a new seed multimedia message and has registered successfully, the MMSG replaces the ID in the original message content with the new ID of the seed multimedia message, stores the content of the seed multimedia message locally and waits for the MMTC to acquire the content of the seed multimedia message; if the current multimedia message is not a new seed multimedia message, the MMSG delivers the current multimedia message as an original message.

Step 307-308: the MMSC sends a notification request message to the MMS terminal of the receiver to notify the MMS terminal of the receiver to extract the content of the multimedia message from the MMSC; the MMS terminal of the receiver returns a notification response message to the MMSC after receiving the notification request message.

Step 309-311: the MMS terminal of the receiver sends an acquisition request message to the MMSC to request to acquire the content of the multimedia message; the MMSC sends an acquisition response message to the MMS terminal of the receiver and sends the content of the multimedia message to the MMS terminal of the receiver; after receiving the multimedia message, the MMS terminal of the receiver returns a successful acquisition confirmation message to the MMSC to confirm that the multimedia message has been received successfully.

Step 312-313: the MMSC sends a delivery report request message to the MMSG; and the MMSG returns a delivery report response message to the MMSC.

Step 314-315: the MMSG determines whether to return a delivery report message to the SP according to an identifier, which indicates whether a delivery report is required, included in the submission request message from the SP; if a delivery report is required, the MMSG sends a delivery report request to the SP, after receiving the delivery report request, the SP returns a delivery report response to the MMSG. If the SP receives a status code of application failure of the content of the seed multimedia message, the content of the seed multimedia message can be applied over again.

Step 316: the MMTC periodically acquires the content of the seed multimedia message from the MMSG, and the MMTC is responsible for deleting the content file of the seed multimedia message on the MMSG after successfully acquiring the content of the seed multimedia message.

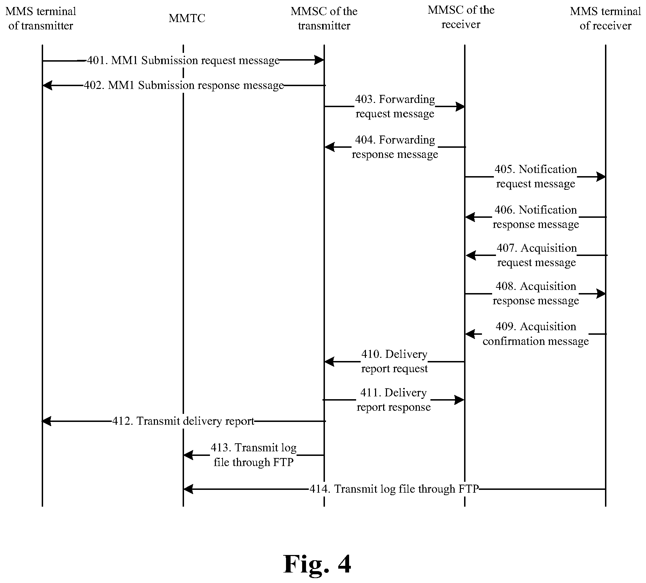

Fig. 4 is a flowchart of the service processing procedure of forwarding a seed multimedia message, and the flow specifically comprises the steps as follows.

Step 401: an MMS terminal sends an MM1 submission request message to an MMSC to which a user of the transmitter belongs, wherein the message comprises information of a seed multimedia message and address information of the MMS terminal of the receiver, e.g. a mobile phone number. At the same time, the MMSC records SRC information (comprising an ID of the multimedia message and an SPID to which the multimedia message belongs etc.) of the multimedia message in a database.

Step 402: the MMSC to which the user of the transmitter belongs performs authentication for the message and judges which MMCS the user of the receiver belongs to, after the authentication is completed, the MMSC to which the user of the transmitter belongs returns an MM1 submission response message to the MMS user of the transmitter.

Step 403: the MMSC to which the user of the transmitter belongs judges that the user of the receiver belongs to another MMSC, and forwards the message to the MMSC to which the user of the receiver belongs through an MM4 forwarding request message.

Step 404: the MMSC to which the user of the receiver belongs completes the service authentication and returns an MM4 forwarding response message to the MMSC to which the user of the transmitter belongs.

Step 405-406: the MMSC to which the user of the receiver belongs sends a notification request message to the MMS terminal of the receiver to notify the MMS terminal of the receiver to extract the content of the multimedia message from the MMSC; the MMS terminal of the receiver returns a notification response message to the MMSC after receiving the notification request message.

Step 407-408: the MMS terminal of the receiver sends an acquisition request message to request to get back the content of the multimedia message; the MMSC sends an acquisition response message to the MMS terminal of the receiver and sends the content of the multimedia message to the MMS terminal of the receiver, and records the SRC information of the multimedia message in the database.

Step 409: the MMS terminal of the receiver returns a successful acquisition confirmation message to the MMSC to confirm that the content of the multimedia message has been received successfully.

Step 410-411: the MMSC of the receiver triggers a trace log, an O/T mark of which is set as T to indicate successful reception, and records the trace log locally in the form of file. Subsequently, the MMSC to which the user of the receiver belongs returns a delivery report request message to the MMSC to which the user of the transmitter belongs; the MMSC to which the user of the transmitter belongs returns a delivery report response message to the MMSC to which the user of the receiver belongs. The MMSC of the transmitter triggers the trace log, set the O/T mark of the trace log as O to indicate successful submission, and records the trace log locally in the form of file.

Step 412: the MMSC to which the user of the transmitter belongs returns a delivery report message to the user of the transmitter according to the requirement of the user.

Step 413-414: when a generating triggering condition of the trace log file of the content of the message arrives, the MMSCs of the transmitter and the receiver respectively transmit the trace log file which records the forwarding procedure of the seed multimedia message to the MMTC by using a file transmission interface of the ftp; after receiving the trace log file, the MMTC completes the related statistic and analysis processing.

The descriptions above are only preferable embodiments of the present invention and are not used for limiting the protection scope of the present invention.

## Claims

1. A method for tracing a multimedia message, comprising:
delivering by a Service Provider, SP, a seed multimedia message carrying a trace mark to a Multimedia Messaging Service Gateway, MMSG; distinguishing by the MMSG the seed multimedia message according to the trace mark and initiating by the MMSG a registration procedure of the seed multimedia message to a Multimedia Messaging Trace Centre, MMTC; wherein the registration procedure of the seed multimedia message comprises: sending by the MMSG a registration request message to the MMTC, wherein the registration request message carries related information of the seed multimedia message; judging by the MMTC whether the seed multimedia message has registered according to the registration request message, if the seed multimedia message has not registered, then generating a new identifier of the seed multimedia message, storing the identifier of the seed multimedia message and the related information of the seed multimedia message in a database, and returning the generated new identifier of the seed multimedia message to the MMSG; if the seed multimedia message has registered, then returning the identifier of the registered seed multimedia message to the MMSG; and if the registration of the seed multimedia message fails, then returning a failure response to the MMSG, wherein the related information of the seed multimedia message at least comprises a check code of content of the seed multimedia message, a size of the registration request message and a Service Provider Identifier, SPID, to which the seed multimedia message belongs; wherein the step of judging whether the seed multimedia message has registered comprises: judging whether there exists a record which is consistent with the check code of the content of the seed multimedia message and the size of the registration request message in the database; if there is no such record, then the seed multimedia message has not registered; if there is such a record and the SPID to which the seed multimedia message belongs is the same, then the seed multimedia message has registered, if there is such a record and the SPID to which the seed multimedia message belongs is different, the registration of the seed multimedia message fails;
recording by a Multimedia Messaging Service Centre, MMSC, during a forwarding procedure of the seed multimedia message, a trace log file; and
periodically acquiring and processing by the MMTC the trace log file generated by the MMSC, acquiring and processing by the MMTC a seed multimedia message content file buffered by the MMSG, storing by the MMTC registration information of the seed multimedia message which has registered successfully and content of the trace log file transmitted by the MMSC, performing statistic operation by the MMTC to obtain forwarding times of the seed multimedia message according to registration information of the seed multimedia message and content of the trace log recorded by the MMSC.

2. The method according to claim 1, wherein the step of delivering by the SP the seed multimedia message carrying the trace mark to the MMSG comprises: content of the seed multimedia message in the seed multimedia message is delivered in a form of Smile, and the trace mark is added into a source, SRC, field corresponding to the content of the seed multimedia message.

3. The method according to claim 1, wherein the MMTC periodically scans the trace log file transmitted from the MMSC, wherein the trace log file comprises an identifier of the seed multimedia message generated during the registration of the seed multimedia message; the registration information of the seed multimedia message at least comprises an identifier of the seed multimedia message and an SPID to which the seed multimedia message belongs; the MMTC performs statistic processing for the trace log file to generate report statistic information.

4. An apparatus for tracing a multimedia message, comprising:
a registration module (201), configured to receive and process a registration request message of a seed multimedia message sent by a Multimedia Messaging Service Gateway, MMSG, wherein the registration module (201) comprises: a registration checkout module, configured to perform registration checkout of the seed multimedia message, compare related information of the seed multimedia message in the registration request message of the seed multimedia message with corresponding information of all registered seed multimedia messages stored in the database, judge whether the seed multimedia message has registered, and invoke a corresponding registration sub-module according to a comparison result; a first registration sub-module, configured to generate a new identifier of the seed multimedia message in a condition that the seed multimedia message has not registered, store the identifier and related information of the seed multimedia message in the database, and return the generated new identifier of the seed multimedia message to the MMSG; a second registration sub-module, configured to acquire, in a condition that the seed multimedia message has registered, the identifier of the registered seed multimedia message from the database module, and return the identifier of the registered seed multimedia message to the MMSG; and a third registration sub-module, configured to return a registration failure response to the MMSG in a condition that the registration fails, wherein the related information of the seed multimedia message at least comprises a check code of content of the seed multimedia message, a size of the registration request message and a Service Provider Identifier, SPID, to which the seed multimedia message belongs; the registration checkout module first judges whether there exists a record which is consistent with the check code of the content of the seed multimedia message and the size of the registration request message in the database, invokes the first registration sub-module to perform processing if there is no such record, invokes the second registration sub-module to perform processing if there is such a record and the SPID to which the seed multimedia message belongs is the same, and invokes the third registration sub-module to perform processing if there is such a record but the SPID to which the seed multimedia message belongs is different;
a periodic scanning module (202), configured to periodically acquire and process a trace log file generated by a Multimedia Messaging Service Centre, MMSC, and acquire and process a seed multimedia message content file buffered by the MMSG;
the database module (203) being configured to store registration information of the seed multimedia message which has registered successfully and content of the trace log file transmitted by the MMSC; and
the report module (204) being configured to generate report statistic information of the seed multimedia message according to the registration information of the seed multimedia message and the content of the trace log file stored in the database module (203).

5. The apparatus according to claim 4, further comprising:
a seed multimedia message content display module (205), configured to display content of the seed multimedia message to a user, and provide report data, which are generated by querying the report module, for an operator.

## Patentansprüche

1. Verfahren zum Verfolgen einer Multimedianachricht, umfassend:
durch einen Dienstanbieter (Service Provider, SP) Übermitteln einer Start-Multimedianachricht (Seed-Multimedianachricht), die eine Verfolgungsmarkierung transportiert, an ein Multimedia-Nachrichtenübermittlungsdienst-Gateway (Multimedia Messaging Service Gateway, MMSG); durch das MMSG Unterscheiden der Start-Multimedianachricht anhand der Verfolgungsmarkierung und durch das MMSG Auslösen eines Registrierungsablaufs der Start-Multimedianachricht bei einem Multimedia-Nachrichtenverfolgungszentrum (Multimedia Messaging Trace Centre, MMTC); wobei der Registrierungsablauf der Start-Multimedianachricht umfasst: durch das MMSG Senden einer Registrierungsanforderungsnachricht an das MMTC, wobei die Registrierungsanforderungsnachricht zugehörige Informationen der Start-Multimedianachricht transportiert; durch das MMTC Beurteilen, ob die Start-Multimedianachricht entsprechend der Registrierungsanforderungsnachricht registriert wurde, falls die Start-Multimedianachricht nicht registriert wurde, Erzeugen einer neuen Kennung der Start-Multimedianachricht, Speichern der Kennung der Start-Multimedianachricht und der zugehörigen Informationen der Start-Multimedianachricht in einer Datenbank und Zurückgeben der erzeugten neuen Kennung der Start-Multimedianachricht an das MMSG; falls die Start-Multimedianachricht registriert wurde, Zurückgeben der Kennung der registrierten Start-Multimedianachricht an das MMSG; und falls die Registrierung der Start-Multimedianachricht fehlschlägt, Zurückgeben einer Fehlernachricht an das MMSG, wobei die zugehörigen Informationen der Start-Multimedianachricht mindestens einen Prüfcode des Inhalts der Start-Multimedianachricht, eine Größe der Registrierungsanforderungsnachricht und eine Dienstanbieterkennung (Service Provider Identifier, SPID) umfasst, zu der die Start-Multimedianachricht gehört; wobei der Schritt des Beurteilens, ob die Start-Multimedianachricht registriert wurde, umfasst: Beurteilen, ob ein Datensatz vorliegt, der mit dem Prüfcode des Inhalts der Start-Multimedianachricht und der Größe der Registrierungsanforderungsnachricht in der Datenbank übereinstimmt; falls kein derartiger Datensatz vorliegt, wurde die Start-Multimedianachricht nicht registriert; falls ein derartiger Datensatz vorliegt und es sich bei der SPID, zu der die Start-Multimedianachricht gehört, um dieselbe handelt, wurde die Start-Multimedianachricht registriert, wenn ein derartiger Datensatz vorliegt und sich die SPID, zu der die Start-Multimedianachricht gehört, unterscheidet, schlägt die Registrierung der Start-Multimedianachricht fehl;
durch ein Multimedia-Nachrichtendienstzentrum (Multimedia Messaging Service Centre, MMSC) während eines Weiterleitungsablaufs der Start-Multimedianachricht Aufzeichnen einer Verfolgungsprotokolldatei; und
durch das MMTC in regelmäßigen Abständen Erfassen und Verarbeiten der durch das MMSC erzeugten Verfolgungsprotokolldatei, durch das MMTC Erfassen und Verarbeiten einer durch das MMSG gepufferten Start-Multimedianachricht-Inhaltsdatei, durch das MMTC Speichern von Registrierungsinformationen der Start-Multimedianachricht, die erfolgreich registriert wurde, und des Inhalts der durch das MMSC übertragenen Verfolgungsprotokolldatei, durch das MMTC Durchführen einer Statistikoperation, um Weiterleitungszeiten der Start-Multimedianachricht entsprechend den Registrierungsinformationen der Start-Multimedianachricht und dem Inhalt des durch das MMSC aufgezeichneten Verfolgungsprotokolls zu erhalten.

2. Verfahren nach Anspruch 1, wobei der Schritt des Übermittelns der Start-Multimedianachricht, die die Verfolgungsmarkierung transportiert, durch den SP an das MMSG umfasst: Inhalt der Start-Multimedianachricht in der Start-Multimedianachricht wird in Form von Smile übermittelt, und die Verfolgungsmarkierung wird einem Quellfeld (Source-Feld, SRC-Feld) hinzugefügt, das dem Inhalt der Start-Multimedianachricht entspricht.

3. Verfahren nach Anspruch 1, wobei das MMTC in regelmäßigen Abständen die vom MMC übertragene Verfolgungsprotokolldatei abtastet, wobei die Verfolgungsprotokolldatei eine Kennung der Start-Multimedianachricht umfasst, die während der Registrierung der Start-Multimedianachricht erzeugt wurde; die Registrierungsinformationen der Start-Multimedianachricht mindestens eine Kennung der Start-Multimedianachricht und eine SPID umfassen, zu der die Start-Multimedianachricht gehört; und das MMTC eine statistische Bearbeitung der Verfolgungsprotokolldatei durchführt, um statistische Berichtsinformationen zu erzeugen.

4. Vorrichtung zum Verfolgen einer Multimedianachricht, umfassend:
ein Registrierungsmodul (201), das konfiguriert ist, um eine durch eine Multimedia Messaging Service Gateway, MMSG, gesendete Registrierungsanforderungsnachricht zu empfangen und zu verarbeiten, wobei das Registrierungsmodul (201) umfasst: ein Registrierungs-Auscheckmodul, das konfiguriert ist, um ein Registrierungs-Auschecken der Start-Multimedianachricht durchzuführen, zugehörige Informationen der Start-Multimedianachricht in der Registrierungsanforderungsnachricht der Start-Multimedianachricht mit entsprechenden Informationen aller registrierten Start-Multimedianachrichten zu vergleichen, die in der Datenbank gespeichert sind, zu beurteilen, ob die Start-Multimedianachricht registriert wurde, und entsprechend einem Vergleichsergebnis ein entsprechendes Registrierungs-Untermodul aufzurufen; ein erstes Registrierungs-Untermodul, das konfiguriert ist, um eine neue Kennung der Start-Multimedianachricht bei einem Zustand zu erzeugen, bei dem die Start-Multimedianachricht nicht registriert wurde, die Kennung und zugehörige Informationen der Start-Multimedianachricht in der Datenbank zu speichern und die erzeugte neue Kennung der Start-Multimedianachricht an das MMSG zurückzugeben; ein zweites Registrierungs-Untermodul, das konfiguriert ist, um bei einem Zustand, bei dem die Start-Multimedianachricht registriert wurde, die Kennung der registrierten Start-Multimedianachricht aus dem Datenbankmodul zu erfassen und die Kennung der registrierten Start-Multimedianachricht an das MMSG zurückzugeben; und ein drittes Registrierungs-Untermodul, das konfiguriert ist, um an das MMSG eine Registrierungs-Fehlerantwort bei einem Zustand zurückzugeben, bei dem die Registrierung fehlschlägt, wobei die zugehörigen Informationen der Start-Multimedianachricht mindestens einen Prüfcode des Inhalts der Start-Multimedianachricht, eine Größe der Registrierungsanforderungsnachricht und eine Dienstanbieterkennung (Service Provider Identifier, SPID) umfassen, zu der die Start-Multimedianachricht gehört; wobei das Registrierungs-Auscheckmodul zuerst beurteilt, ob ein Datensatz vorliegt, der mit dem Prüfcode des Inhalts der Start-Multimedianachricht und der Größe der Registrierungsanforderungsnachricht in der Datenbank übereinstimmt, das erste Registrierungs-Untermodul aufruft, um eine Verarbeitung durchzuführen, wenn kein derartiger Datensatz vorliegt, das zweite Registrierungs-Untermodul aufruft, um eine Verarbeitung durchzuführen, wenn ein derartiger Datensatz vorliegt und die SPID dieselbe ist, zu der die Start-Multimedianachricht gehört, und das dritte Registrierungs-Untermodul aufruft, um eine Verarbeitung durchzuführen, wenn ein derartiger Datensatz vorliegt, die SPID sich aber unterscheidet, zu der die Start-Multimedianachricht gehört;
ein Modul (202) zum Abtasten in regelmäßigen Abständen, das konfiguriert ist, um in regelmäßigen Abständen eine Verfolgungsprotokolldatei zu erfassen und zu verarbeiten, die durch ein Multimedia Messaging Service Centre, MMSC, erzeugt wurde, und eine durch das MMSG gepufferte Start-Multimedianachricht-Inhaltsdatei zu erfassen und zu verarbeiten;
wobei das Datenbankmodul (203) konfiguriert ist, um Registrierungsinformationen der Start-Multimedianachricht, die erfolgreich registriert wurde, und Inhalt der durch das MMSC übertragenen Verfolgungsprotokolldatei zu speichern; und
das Berichtsmodul (204) konfiguriert ist, um entsprechend den Registrierungsinformationen der Start-Multimedianachricht und dem Inhalt der im Datenbankmodul (203) gespeicherten Verfolgungsprotokolldatei statistische Berichtsinformationen der Start-Multimedianachricht zu erzeugen.

5. Vorrichtung nach Anspruch 4, ferner umfassend:
ein Anzeigemodul (205) für Start-Multimedianachrichteninhalte, das konfiguriert ist, um einem Benutzer Inhalte der Start-Multimedianachricht anzuzeigen und einem Bediener Berichtsdaten bereitzustellen, die durch Abfragen des Berichtsmoduls erzeugt werden.

## Revendications

1. Procédé de suivi d'un message multimédia, comprenant :
la fourniture, par un fournisseur de services (SP), d'un message multimédia d'origine portant une marque de suivi à une passerelle de service de messagerie multimédia (MMSG), la distinction par la MMSG du message multimédia d'origine en fonction de la marque de suivi et l'initiation, par la MMSG, d'une procédure d'enregistrement du message multimédia d'origine sur un centre de suivi de messagerie multimédia (MMTC), dans lequel la procédure d'enregistrement du message multimédia d'origine comprend : l'envoi, par la MMSG, d'un message de demande d'enregistrement au MMTC, dans lequel le message de demande d'enregistrement porte des informations associées du message multimédia d'origine ; l'évaluation, par le MMTC, pour savoir si le message multimédia d'origine est enregistré en fonction du message de demande d'enregistrement, si le message multimédia d'origine n'est pas enregistré, la génération d'un nouvel identifiant du message multimédia d'origine, le stockage de l'identifiant du message multimédia d'origine et des informations associées du message multimédia d'origine dans une base de données, et le renvoi du nouvel identifiant généré du message multimédia d'origine à la MMSG ; si le message multimédia d'origine est enregistré, le renvoi de l'identifiant du message multimédia d'origine enregistré à la MMSG ; et si l'enregistrement du message multimédia d'origine échoue, le renvoi d'une réponse d'échec à la MMSG, dans lequel les informations associées du message multimédia d'origine comprennent au moins un code de vérification du contenu du message multimédia d'origine, une taille du message de demande d'enregistrement et un identifiant de fournisseur de services (SPID), auquel appartient le message multimédia d'origine ; dans lequel l'étape d'évaluation pour savoir si le message multimédia d'origine est enregistré comprend : l'évaluation pour savoir s'il existe un enregistrement qui est cohérent avec le code de vérification de contenu du message multimédia d'origine et la taille du message de demande d'enregistrement dans la base de données ; si un tel enregistrement n'existe pas, le message multimédia d'origine n'est pas enregistré ; s'il existe un tel enregistrement et que le SPID auquel appartient le message multimédia d'origine est le même, le message multimédia d'origine est enregistré, s'il existe un tel enregistrement et que le SPID auquel appartient le message multimédia d'origine est différent, l'enregistrement du message multimédia d'origine échoue ;
l'enregistrement par un centre de service de messagerie multimédia (MMSC), pendant une procédure de transfert du message multimédia d'origine, d'un fichier journal de suivi ; et
l'acquisition et le traitement périodiques, par le MMTC, du fichier journal de suivi généré par le MMSC, l'acquisition et le traitement, par le MMTC, d'un fichier de contenu de message multimédia d'origine mis en mémoire tampon par la MMSG, le stockage par le MMTC d'informations d'enregistrement du message multimédia d'origine dont l'enregistrement a réussi et du contenu du fichier journal de suivi transmis par le MMSC, la réalisation d'une opération statistique par le MMTC pour obtenir les temps de transfert du message multimédia d'origine selon les informations d'enregistrement du message multimédia d'origine et le contenu du journal de suivi enregistré par le MMSC.

2. Procédé selon la revendication 1, dans lequel l'étape de fourniture, par le SP, du message multimédia d'origine portant la marque de suivi à la MMSG comprend : le contenu du message multimédia d'origine dans le message multimédia d'origine est fourni sous la forme d'un sourire et la marque de suivi est ajoutée dans un champ source (SRC) correspondant au contenu du message multimédia d'origine.

3. Procédé selon la revendication 1, dans lequel le MMTC balaie périodiquement le fichier journal de suivi transmis par le MMSC, dans lequel le fichier journal de suivi comprend un identifiant du message multimédia d'origine généré pendant l'enregistrement du message multimédia d'origine ; les informations d'enregistrement du message multimédia d'origine comprennent au moins un identifiant du message multimédia d'origine et un SPID auquel appartient le message multimédia d'origine ; le MMTC réalise un traitement statistique pour le fichier journal de suivi afin de générer des informations statistiques de rapport.

4. Appareil de suivi d'un message multimédia, comprenant :
un module d'enregistrement (201), conçu pour recevoir et traiter un message de demande d'enregistrement d'un message multimédia d'origine envoyé par une passerelle de service de messagerie multimédia (MMSG), dans lequel le module d'enregistrement (201) comprend : un module de vérification d'enregistrement, conçu pour réaliser une vérification d'enregistrement du message multimédia d'origine, comparer les informations associées du message multimédia d'origine dans le message de demande d'enregistrement du message multimédia d'origine à des informations correspondantes de tous les messages multimédia d'origine enregistrés, stockés dans la base de données, évaluer si le message multimédia d'origine a été enregistré et invoquer un module secondaire d'enregistrement correspondant en fonction d'un résultat de comparaison ; un premier module secondaire d'enregistrement, conçu pour générer un nouvel identifiant du message multimédia d'origine dans un état dans lequel le message multimédia d'origine n'a pas été enregistré, stocker l'identifiant et les informations associées du message multimédia d'origine dans la base de données et renvoyer le nouvel identifiant généré du message multimédia d'origine à la MMSG ; un deuxième module secondaire d'enregistrement, conçu pour acquérir, dans un état dans lequel le message multimédia d'origine est enregistré, l'identifiant du message multimédia d'origine enregistré depuis le module de base de données et renvoyer l'identifiant du message multimédia d'origine enregistré à la MMSG ; et un troisième module secondaire d'enregistrement, conçu pour renvoyer une réponse d'échec d'enregistrement à la MMSG dans un état dans lequel l'enregistrement échoue, dans lequel les informations associées du message multimédia d'origine comprennent au moins un code de vérification du contenu du message multimédia d'origine, une taille du message de demande d'enregistrement et un identifiant de fournisseur de services (SPID), auquel appartient le message multimédia d'origine ; le module de vérification d'enregistrement évalue tout d'abord s'il existe un enregistrement qui est cohérent avec le code de vérification du contenu du message multimédia d'origine et la taille du message de demande d'enregistrement dans la base de données, invoque le premier module secondaire d'enregistrement afin de réaliser un traitement si un tel enregistrement n'existe pas, invoque le deuxième module secondaire d'enregistrement afin de réaliser un traitement s'il existe un tel enregistrement et si le SPID auquel appartient le message multimédia d'origine est le même et invoque le troisième module secondaire d'enregistrement afin de réaliser un traitement s'il existe un tel enregistrement mais que le SPID auquel appartient le message multimédia d'origine est différent ;
un module de balayage périodique (202), conçu pour acquérir et traiter périodiquement un fichier journal de suivi généré par un centre de service de messagerie multimédia (MMSC) et acquérir et traiter un fichier de contenu de message multimédia d'origine mis en mémoire tampon par la MMSG ;
le module de base de données (203) étant conçu pour stocker des informations d'enregistrement du message multimédia d'origine dont l'enregistrement a réussi et le contenu du fichier journal de suivi transmis par le MMSC ; et
le module de rapport (204) étant conçu pour générer des informations statistiques de rapport du message multimédia d'origine en fonction des informations d'enregistrement du message multimédia d'origine et du contenu du fichier journal de suivi stockés dans le module de base de données (203).

5. Appareil selon la revendication 4, comprenant en outre :
un module d'affichage (205) de contenu de message multimédia d'origine, conçu pour afficher le contenu du message multimédia d'origine pour un utilisateur et pour fournir des données de rapport, qui sont générées par interrogation du module de rapport, pour un opérateur.
